# EUROPEAN PATENT SPECIFICATION

(11) **EP 4 478 508 B1**
(45) Date of publication and mention of the grant of the patent: **18.03.2026**
(21) Application number: 23900949.1
(22) Date of filing: 20.11.2023
(51) Int. Cl.: H01M 50/24, H01M 50/35, H01M 50/211, H01M 50/358

(54) **BATTERY MODULE AND BATTERY PACK INCLUDING SAME**
BATTERIEMODUL UND BATTERIEPACK DAMIT
MODULE DE BATTERIE ET BLOC-BATTERIE LE COMPRENANT

(30) Priority: 05.12.2022 KR 20220168019; 31.03.2023 KR 20230043170
(43) Date of publication of application: 18.12.2024
(73) Proprietor: LG Energy Solution, Ltd., Seoul 07335 (KR)
(72) Inventor: PARK, Jeong-Hoon, Daejeon 34122 (KR); KIM, Soo-Youl, Daejeon 34122 (KR); JUNG, Hye-Mi, Daejeon 34122 (KR)
(74) Representative: Plasseraud IP
(86) International application number: PCT/KR2023/018644
(87) International publication number: WO 2024/122930

(56) References cited:
- EP-A1- 4 376 200
- EP-A1- 4 383 419
- CN-A- 113 794 011
- KR-A- 20130 044 879
- KR-A- 20160 054 269
- KR-A- 20190 094 921
- KR-A- 20200 078 450

## Description

### TECHNICAL FIELD

The present disclosure relates to a battery module, and more specifically, it relates to a battery module with excellent safety against thermal events and a battery pack including the same.

The present application claims priority to Korean Patent Application No. 10-2022-0168019 filed on December 05, 2022 and Korean Patent Application No. 10-2023-0043170 filed on March 31, 2023 in the Republic of Korea.

### BACKGROUND ART

As technology development and demand for various mobile devices, electric vehicles, energy storage systems (ESSs), or the like significantly increase, interest in and demand for secondary batteries as an energy source are rapidly increasing (see for example the documents EP4383419A1, EP4376200A1 and KR20200078450A).

Although nickel-cadmium batteries or nickel-hydrogen batteries have conventionally been used widely as secondary batteries, nowadays, lithium secondary batteries are widely used because they have advantages of free charging and discharging due to almost no memory effect, a very low self-discharge rate, and a high energy density, compared to nickel-based secondary batteries.

The lithium secondary batteries generally use lithium-based oxides and carbon materials as positive and negative electrode active materials, respectively. The lithium secondary batteries include an electrode assembly in which the positive and negative electrode plates, which are respectively coated with the positive and negative electrode active materials, are disposed with a separator therebetween, and an exterior case, i.e., a battery case, that seals and stores the electrode assembly with an electrolyte.

In general, the secondary batteries may be classified, depending on the shape of the exterior case, into can-type batteries in which the electrode assembly is accommodated in a metal can and pouch-type batteries in which the electrode assembly is accommodated in a pouch of an aluminum laminate sheet.

Currently, the operating voltage of one lithium secondary battery widely used is approximately 2.5V to 4.5V. Therefore, in the case of electric vehicles or power storage devices that require large capacity and high output, a battery module or battery pack is configured by connecting multiple lithium secondary batteries in series and/or parallel and used as an energy source. In particular, in order to satisfy the output or capacity required for electric vehicles, the battery module or battery pack includes a large number of lithium secondary batteries.

Meanwhile, it is important to design a battery module or battery pack to prepare for the occurrence of a thermal event.

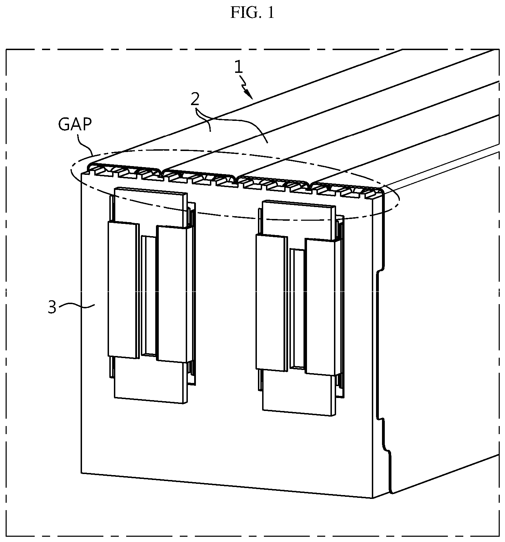

Referring to FIG. 1, a battery module according to the prior art (a battery module being developed by the present applicant) is configured by stacking cell units in which about 2 to 3 pouch-type battery cells are stored in a cell cover 2 in one direction to form a cell unit group 1 and assembling a bus-bar frame assembly 3 to the cell unit group 1. Here, the cell cover may be provided in a form that covers three faces (top, left, and right portions) of the 2 to 3 stacked pouch-type battery cells, and the bus-bar frame assembly may be configured to include a plurality of bus-bars welded to electrode leads located at the front or rear of the cell units, and a bus-bar frame provided to support the plurality of bus-bars and cover the front/rear of the cell unit group. A frame cover may be further mounted to the front of the bus-bar frame.

The configurations in which the cell unit is formed by storing 2 to 3 pouch-type battery cells in the cell cover and in which the cell unit group is configured by stacking a plurality of cell units are intended to block propagation of thermal runaway of the pouch-type battery cells when a thermal event occurs and are intended for directional venting in which the venting gas emitted from a trigger battery cell is guided and discharged in a predictable direction.

However, as shown in the portion indicated by "GAP" in FIG. 1, a gap may be formed due to assembly tolerances between the cell unit group and the bus-bar frame assembly (or frame cover), so that venting gases or particles are likely to be discharged through this gap. If venting gas or the like is discharged in an unexpected direction, directional venting for inducing venting gas or the like in an intended direction may fail, and furthermore, there may be thermal damage to other battery modules or combustion products around the module, thereby increasing damage. Therefore, a method to solve the above problems is required.

### DISCLOSURE

### Technical Problem

The present disclosure has been designed to solve the problems of the related art, and therefore the present disclosure is directed to providing a battery module with excellent directional venting performance for discharging high-temperature gases or the like in an intended direction when a thermal event occurs.

In addition, the present disclosure is also to provide a battery module capable of increasing the support and rigidity of pouch-type battery cells and effectively blocking heat energy propagation between the pouch-type battery cells when a thermal event occurs.

The technical problems that the present disclosure seeks to solve are not limited to the above-mentioned problems, and other problems not mentioned above will be clearly understood by those skilled in the art from the description of the invention described below.

### Technical Solution

According to one aspect of the present disclosure, there is provided a battery module including: a cell unit stack comprised of a plurality of cell units stacked in one direction; a bus-bar frame assembly disposed inside the cell unit stack and configured to electrically connect pouch-type battery cells; and a module case configured to store the cell unit stack and the bus-bar frame assembly, wherein the cell unit may include: at least one pouch-type battery cell; and a cell cover configured to surround the pouch-type battery cell and the bus-bar frame assembly and having an open bottom.

The cell cover includes: an upper cover portion configured to cover the top face of the battery cell and the bus-bar frame assembly stored therein; a first side cover portion and a second side cover portion extending downwards from the left edge and right edge of the upper cover portion so as to cover the left face and right face of the battery cell, respectively; and a front cover portion and a rear cover portion extending downwards from the front end and rear end of the upper cover portion, respectively, so as to cover at least a portion of the bus-bar frame assembly.

The cell cover may be configured such that the lower face of the battery cell is open.

The cell cover may be configured such that the first side cover portion and the second side cover portion have a length shorter than the length of the upper cover portion.

The cell cover may be configured such that the first side cover portion and the second side cover portion have a symmetrical structure, and such that portions between one ends of the first and second side cover portions and the front cover portion, and portions between the other ends of the first and second side cover portions and the rear cover portion have a side opening, respectively.

In the cell unit stack, at least one of the cell covers may have a terminal hole through which a terminal bus-bar provided in the bus-bar frame assembly passes.

The bus-bar frame assembly may include bus-bars in the form of a metal bar and a bus-bar frame, in the form of a plate, configured to support the bus-bars, and the bus-bar frame may have a coupling groove into which at least a portion of the end of the first side cover portion and the end of the second side cover portion is inserted to a predetermined depth in the stacked cell units.

The module case may have a gas venting hole provided on the bottom plate supporting the cell unit stack at the lower portion of the cell unit stack.

The gas venting hole may be provided on the bottom plate at a position corresponding to the position of a cell terrace where an electrode lead of the pouch-type battery cell protrudes.

According to another aspect of the present disclosure, there may be provided a battery pack including the battery module described above.

### Advantageous Effects

According to the present disclosure, it is possible to provide a battery module with excellent directional venting performance for discharging high-temperature gases or the like in the intended direction when a thermal event occurs.

In addition, according to the present disclosure, it is possible to provide a battery module capable of increasing the support and rigidity of pouch-type battery cells and effectively blocking heat energy propagation between the pouch-type battery cells when a thermal event occurs.

### DESCRIPTION OF DRAWINGS

FIG. 1 is a diagram illustrating a portion of a battery module according to the prior art.
FIG. 2 is a perspective view schematically illustrating a battery module according to an embodiment of the present disclosure.
FIG. 3 is an exploded perspective view schematically illustrating the battery module in FIG. 2.
FIG. 4 is a perspective view illustrating a cell cover before bending a wing portion according to an embodiment of the present disclosure.
FIG. 5 is a perspective view illustrating the cell cover in FIG. 4 after bending the wing portion.
FIGS. 6 to 8 are diagrams illustrating an example of an assembly process of a cell unit assembly and a bus-bar frame assembly according to an embodiment of the present disclosure.
FIG. 9 is a partially cross-sectional view of a battery module according to an embodiment of the present disclosure.
FIG. 10 is another partially cross-sectional view of a battery module according to an embodiment of the present disclosure.

### BEST MODE

Hereinafter, preferred embodiments of the present disclosure will be described in detail with reference to the accompanying drawings. It should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the configurations proposed in the embodiments and drawings of this specification indicate only the most preferable embodiment of the present disclosure and do not represent all technical ideas of the present disclosure, so it should be understood that various equivalents and modifications could be made thereto at the time of filing the application.

The sizes of respective elements or specific parts of each element shown in the attached drawings are exaggerated, omitted, or simplified for convenience of explanation and clarification thereof. Accordingly, the sizes of respective elements do not entirely reflect their actual sizes. Descriptions of related known functions or configurations, which may obscure the subject matter of the present disclosure, will be omitted.

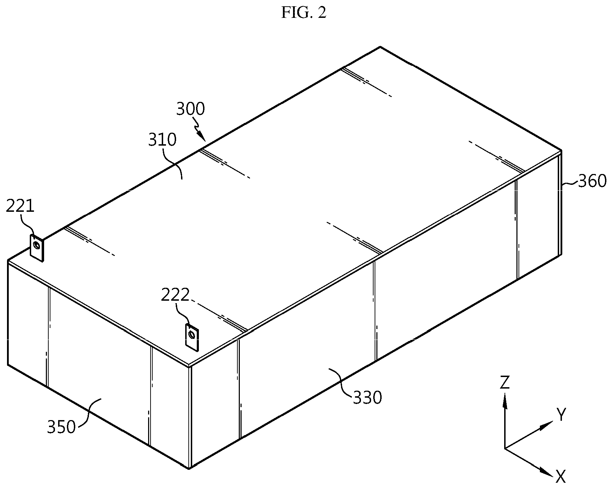

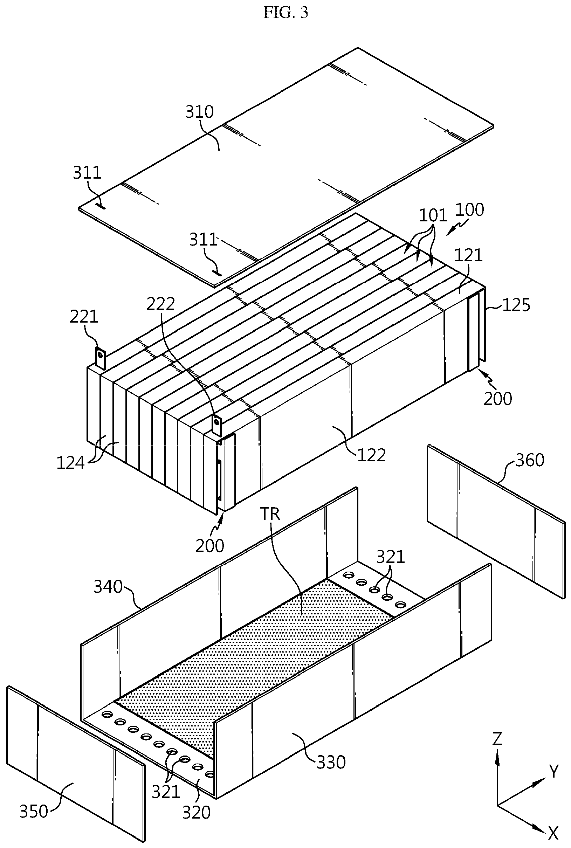

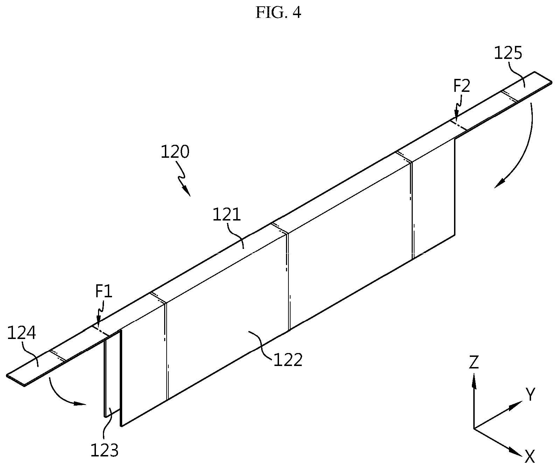

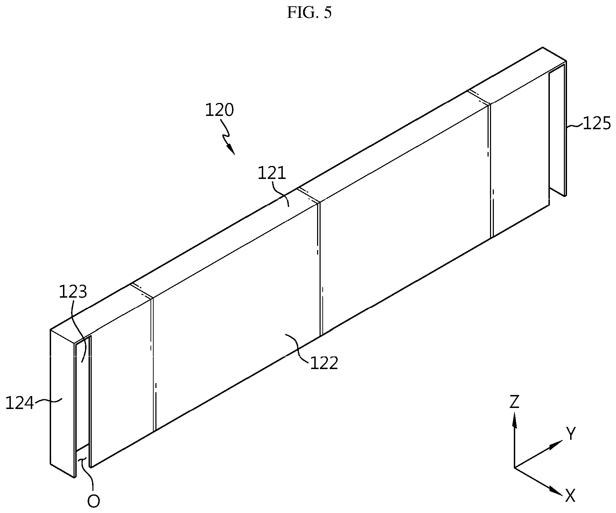

FIG. 2 is a perspective view schematically illustrating a battery module according to an embodiment of the present disclosure, FIG. 3 is an exploded perspective view schematically illustrating the battery module in FIG. 2, FIG. 4 is a perspective view illustrating a cell cover before bending a wing portion according to an embodiment of the present disclosure, and FIG. 5 is a perspective view illustrating the cell cover in FIG. 4 after bending the wing portion.

Referring to these drawings, a battery module according to an embodiment of the present disclosure includes a cell unit stack 100, a bus-bar frame assembly 200, and a module case 300.

The cell unit stack 100 includes a plurality of cell units 101 stacked in one direction, as shown in FIG. 3. Here, the cell unit 101 includes at least one pouch-type battery cell 110 and a cell cover 120 that at least partially surrounds the pouch-type battery cell 110. In particular, as will be described in detail later, the cell cover 120 is configured to surround at least a portion of the bus-bar frame assembly 200.

The pouch-type battery cell 110 includes an electrode lead 111, an electrode assembly, an electrolyte, and a pouch case that stores the electrode assembly and the electrolyte to be sealed. For example, the pouch-type case may be comprised of two pouch sheets, and a recess may be formed on at least one of them. An electrode assembly and an electrolyte are stored in the recess, and the edges of the two pouch sheets are heat-fused. In the pouch-type battery cell 110 described above, the portion where the electrode assembly is received is called a receiving portion 112, and the surrounding portions of the receiving portion 112 are called edges, and the portion of the edges where the pouch sheets are heat-fused and sealed is called a sealing portion.

The electrode lead 111 may have one end connected to the electrode assembly inside the pouch case and the other end protruding to the outside of the pouch case, and a portion between the one end and the other end may be fixed between two pouch sheets when heat-fusing the same. The portion of the electrode lead 111 exposed to the outside of the pouch case may function as an electrode terminal of the pouch-type battery cell 110.

The pouch-type battery cell 110 obtained by packaging the electrode assembly using two pouch sheets may have four sealing portions (the front and rear edges where the electrode lead 111 protrudes, and the remaining two side edges (corresponding to an upper edge and a lower edge in the case where the battery cells 110 are arranged while standing up as shown in this embodiment)). In addition, the pouch-type battery cell 110 obtained by packaging the electrode assembly by folding one pouch sheet may have three sealing portions (corresponding to the front and rear edges where the electrode lead 111 protrudes, and one side edge). Hereinafter, among the sealing portions, the front and rear edges where the electrode lead 111 protrudes will be referred to as cell terraces 113.

One or more pouch-type battery cells 110 may be accommodated inside the cell cover 120. For example, the receiving portion 112 may be erected and approximately 2 to 3 pouch-type battery cells 110 stacked in the horizontal direction may be stored in the cell cover 120.

The cell cover 120 may serve to erect the pouch-type battery cells 110 stably to be disposed inside the module case 300, protect the pouch-type battery cells 110 vulnerable to external impact, and, if some of the plurality of battery cells 110 included in the battery module undergo thermal runaway, block heat energy (flame, high-temperature gas, or the like) from transferring from a trigger battery cell 110 to other battery cells 110.

This cell cover 120 may be made of a metal material. For example, the cell cover 120 may be made of stainless steel (SUS), which has high rigidity and a high thermal melting point.

Specifically, referring to FIGS. 4 and 5, the cell cover 120 includes an upper cover portion 121, a first side cover portion 122, a second side cover portion 123, a front cover portion 124, and a rear cover portion 125, and the bottom thereof is open.

The upper cover portion 121 is configured to cover the upper edge of the battery cell 110 stored inside the cell cover 120. Furthermore, the upper cover portion 121 is configured to extend further than the first and second side cover portions 122 and 123 so as to cover the top of the bus-bar frame assembly 200.

The first side cover portion 122 is configured to extend downwards from the left edge of the upper cover portion 121 so as to cover the left face of the battery cell 110 stored inside the cell cover 120. In addition, the second side cover portion 123 is configured to extend downwards from the right edge of the upper cover portion 121 so as to cover the right face of the battery cell 110 stored inside the cell cover 120.

In the case where one battery cell 110 is stored in the cell cover 120, the left face of the battery cell 110 indicates the left side of the one battery cell 110, and the right face of the battery cell 110 indicates the right side of the single battery cell 110. In addition, in the case where a cell stack in which two or more battery cells 110 are stacked is stored in the cell cover 120, the left face of the battery cell 110 indicates the left side of the cell stack, and the right face of the battery cell 110 indicates the right side of the cell stack.

The first side cover portion 122 and the second side cover portion 123 may be configured to have a length shorter than that of the upper cover portion 121. As shown in FIG. 5, the first side cover portion 122 and the second side cover portion 123 may be configured to extend downwards from both edge lines of the upper cover portion 121, excluding both ends of the upper cover portion 121, respectively.

The front cover portion 124 is configured to extend downwards from the front end (in the -Y-axis direction) of the upper cover portion 121 so as to cover at least a portion of the bus-bar frame assembly 200. In addition, the rear cover portion 125 is configured to extend downwards from the rear end (in the +Y-axis direction) of the upper cover portion 121 so as to cover at least a portion of the bus-bar frame assembly 200. That is, as shown in FIG. 3, the front cover portion 124 is configured to cover the bus-bar frame assembly 200 connected to the front electrode leads 111 of the pouch-type battery cells 110, and the rear cover portion 125 is configured to cover the bus-bar frame assembly 200 connected to the rear electrode leads 111 of the pouch-type battery cells 110.

For example, the cell cover 120 may be provided to have wing portions before storing the pouch-type battery cells 110 therein, as shown in FIG. 4. Here, the wing portions indicate a portion extending in the -Y-axis direction from the point indicated by "F1" and a portion extending in the +Y-axis direction from the point indicated by "F2" in FIG. 4. In the case of the cell cover 120 according to an embodiment of the present disclosure, the wing portion may be configured to be bent in the downward direction so that the wing portion forms the front cover portion 124 or the rear cover portion 125, as shown in FIG. 5.

The first side cover portion 122 and the second side cover portion 123 have a symmetrical structure, and as described above, the lengths thereof are shorter than that of the upper cover portion 121. Therefore, when the wing portions are bent at a right angle with respect to the upper cover portion 121, as shown in FIG. 5, portions between one ends of the first and second side cover portions 122 and 123 and the front cover portion 124, and portions between the other ends of the first and second side cover portions 122 and 123 and the rear cover portion 125 may provide side openings O, respectively.

Meanwhile, when constructing a battery module, although not shown, a bus-bar frame assembly of a size corresponding to one cell cover 120 may be applied, or, as in the present embodiment, a bus-bar frame assembly 200 of a size corresponding to a plurality of cell covers 120 stacked in one direction may be applied. That is, in any case, the configuration of the cell cover 120 including the side openings O according to the present disclosure makes it possible to accommodate the bus-bar frame assembly 200 inside the cell cover 120 while surrounding the same.

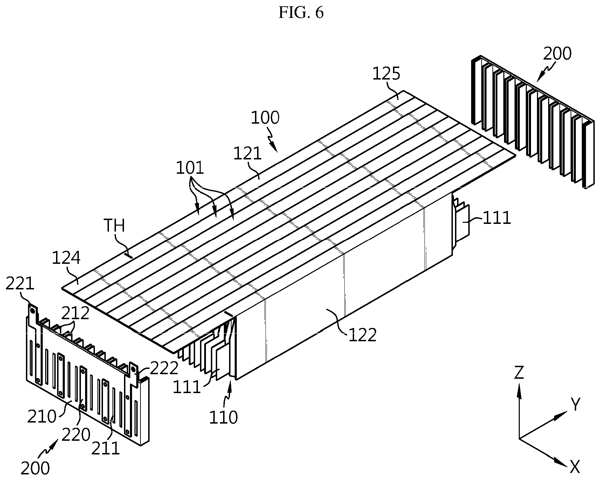

Hereinafter, an implemented configuration in which a single bus-bar frame assembly 200 is assembled to the stacked cell covers 120 will be briefly described with reference to FIGS. 6 to 8.

First, cell units 101 are prepared such that 2 to 3 pouch-type battery cells 110 are accommodated in each cell cover 120. In this case, cell covers 120 having wing portions shown in FIG. 4 are used. In addition, as shown in FIG. 6, the cell units 101 are stacked in one direction to form a pre-assembled cell unit stack 100.

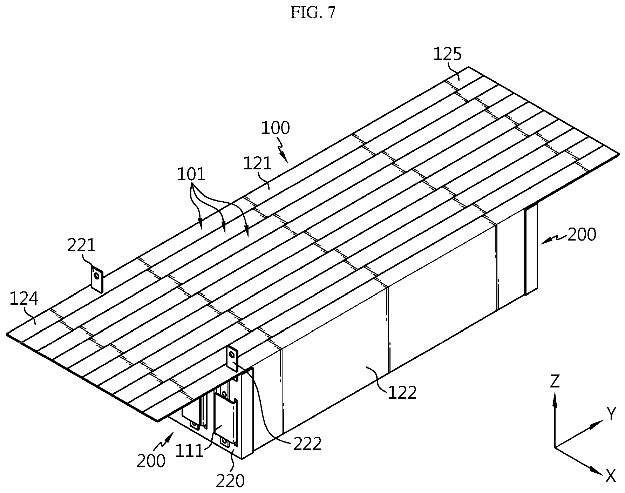

Next, as shown in FIG. 7, the bus-bar frame assemblies 200 are respectively assembled to the front and rear sides of the pre-assembled cell unit stack 100.

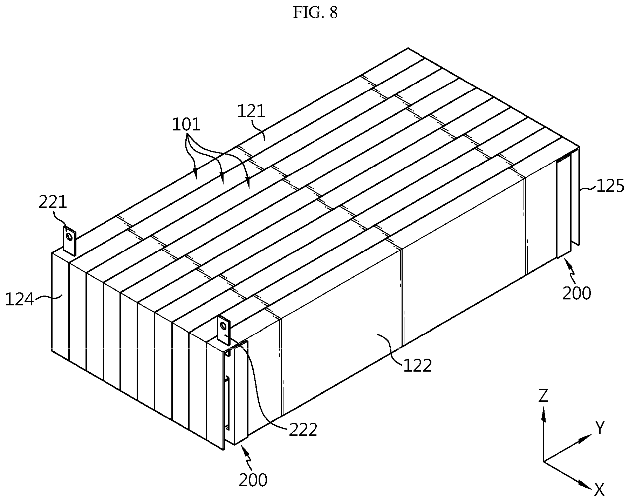

Subsequently, as shown in FIG. 8, the wing portions of the cell covers 120 are all bent such that the bus-bar frame assembly 200 is surrounded by the cell covers 120. If the bus-bar frame assembly 200 and the cell units 101 are assembled in this way, the bus-bar frame assembly 200 may be disposed inside the cell unit stack 100.

Meanwhile, it should be noted that the scope of the present disclosure is not limited to the above-mentioned assembly example. For example, the bus-bar frame assembly 200 and the pouch-type battery cell 110 may be assembled first and then stored as one piece in the stacked cell covers 120. That is, the plurality of cell covers 120 shown in FIG. 5 may be stacked and then put on the pre-assembled bus-bar frame assembly 200 and pouch-type battery cells 110 to cover the same.

As described above, since the battery module according to this embodiment includes the cell cover 120, which includes the upper cover portion 121, the first side cover portion 122, the second side cover portion 123, the front cover portion 124, and the rear cover portion 125, in a structure capable of covering five faces, it is possible to completely cover the bus-bar frame assemblies 200 located at the front and rear of the pouch-type battery cells 110, as well as the pouch-type battery cells 110, as shown in FIG. 8.

Referring back to FIG. 6, the bus-bar frame assembly 200 may include a bus-bar frame 210 and a plurality of bus-bars 220. The bus-bar frame 210 may be configured in the form of a plate having a size roughly corresponding to the overall width and height of the stacked cell covers 120, and provided at both ends of the first and second side cover portions 122 and 123 of the stacked cell covers 120 so as to be coupled.

The bus-bar frame 210 may have lead slits 211 through which the electrode leads 111 of the pouch-type battery cells 110 pass in the +Y-axis or -Y-axis direction. In addition, the bus-bar frame 210 may be made of a material with, for example, excellent electrical insulation and fire resistance, and may be configured to attach bus-bars 220 to its outer surface. In particular, the inner surface of the bus-bar frame 210 facing the pouch-type battery cells 110 may be coated with a fire-resistant and heat-resistant material or a fire-resistant material.

In addition, the bus-bar frame 210 may include a coupling groove 212 into which at least a portion of the end of the first side cover portion 122 and the end of the second side cover portion 123 is inserted to a predetermined depth in the stacked cell units 101.

Specifically, as shown in FIG. 6, a plurality of coupling grooves 212 may be provided on the inner surface of the bus-bar frame in the stacking direction of the cell covers 120. The number of coupling grooves 212 may be configured as needed depending on the number of cell covers 120 stacked.

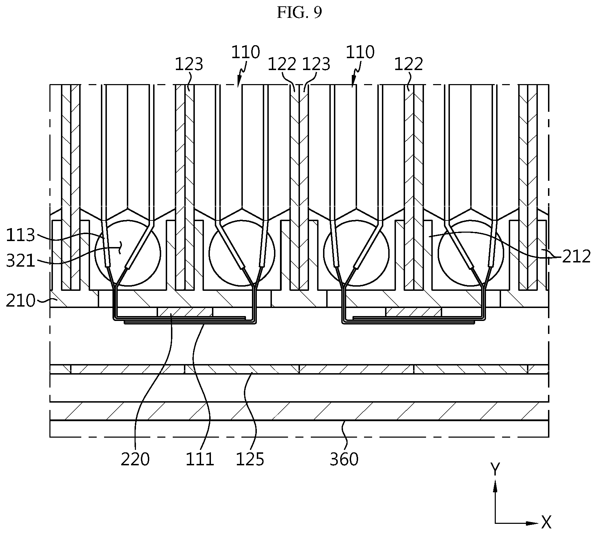

As shown in FIG. 9, the coupling groove 212 may be configured to insert the end of the first side cover portion 122 of the cell cover 120 into the same to a predetermined depth. In this case, the coupling groove 212 may be configured such that the end of the first side cover portion 122 of one of two stacked cell covers 120 and the end of the second side cover portion 122 of the other cell cover 120 are inserted thereinto.

Therefore, the bus-bar frame 210 may be fixedly coupled to the stacked cell covers 120 even without using a separate fastening member. In addition, the stacked cell covers 120 may also be held integrally by the bus-bar frame 210, avoiding gaps between the cell covers 120.

The bus-bars 220 are means for connecting the pouch-type battery cells 110 in series and/or parallel, and may be configured in the form of a bar made of a metal material such as copper, aluminum, nickel, or the like. The electrode leads 111 of the pouch-type battery cells 110 may extend to the outside of the bus-bar frame 210 by passing through the lead slit 211 of the bus-bar frame 210, and the extended portions may be attached to the surface of the bus-bar 220 by welding or the like.

Two of the bus-bars 220 may be used as electrode terminals of the battery module. Here, the bus-bars 220 used as the electrode terminals of the battery module will be specifically called terminal bus-bars 221 and 222, and the terminal bus-bars 221 and 222 include a positive electrode terminal bus-bar 221 and a negative electrode terminal bus-bar 222. The terminal bus-bars 221 and 222 may be provided to extend longer than the other bus-bars 220, so that one ends thereof may be exposed to the outside of the module case 300.

The battery module of this embodiment has terminal bus-bars 221 and 222 having one ends exposed to the top of the module case 300, as shown in FIG. 2. To this end, the module case 300 has a case terminal hole 311 on the top plate 310, as shown in FIG. 3, and the cell unit stack 100, as shown in FIG. 6, has terminal holes TH formed on the outermost one of the cell covers 120 to allow the terminal bus-bars 221 and 222 to pass therethrough.

The case terminal hole 311 and the terminal hole TH may be insulated and sealed with, for example, an insulating gasket (not shown) or the like. In addition, depending on the structures or locations of the terminal bus-bars 221 and 222, the number or locations of the terminal holes TH and/or case terminal holes 311 may be configured to be different from the present embodiment. That is, although the terminal hole TH is provided in each of the two outermost cell covers 120 in this embodiment, the terminal hole TH may be formed a cell cover 120 other than the outermost cell covers 120 or formed only on several cell covers 120. In addition, the terminal bus-bars 221 and 222 may be configured to extend to the outside of the module case 300 by passing through the side openings O of the cell cover 120 without configuring the terminal holes TH on the cell covers 120.

The module case 300 is provided to have an inner space capable of accommodating the cell unit stack 100 and the bus-bar frame assembly 200. The module case 300 according to an embodiment of the present disclosure may include a top plate 310 covering the top face of the inner space, a bottom plate 320 covering the bottom face of the inner space, a pair of side plates 330 and 340 covering both side faces of the inner space, and a pair of end covers 350 and 360 covering the front and rear faces of the inner space, respectively.

Referring back to FIG. 3, the bottom plate 320 and the pair of side plates 330 and 340 may be formed integrally. The element obtained by integrally configuring the bottom plate 320 and the pair of side plates 330 and 340 is called a U-frame. According to the module case 300 including this U-frame, the cell unit stack 100 may be placed inside the U-frame, and then the top plate 310 may be coupled to the top of the U-frame, followed by the end covers 350 and 360 to be coupled thereto, thereby completing the assembling of the battery module.

Additionally, thermal resin TR may be applied in advance to the bottom plate 320. Since the bottom of the cell cover 120 is open, the bottom plate 320 and the lower edges of the battery cells 110 may face each other. Thermal resin TR may be applied to avoid an empty space (air layer) formed between the bottom plate 320 and the lower edges of the battery cells 110, thereby maximizing the heat dissipation efficiency of the battery cells 110.

In addition, the module case 300 has a circular gas venting hole 321 on the bottom plate 320, as shown in FIG. 3. The module case 300 has a plurality of venting holes 321 provided on the bottom, that is, the bottom plate 320. Accordingly, in the battery module according to the present disclosure, if gas, flame, or the like is generated in the battery cells 110, the gas, flame, or the like may be directionally vented in the downward direction of the module case 300.

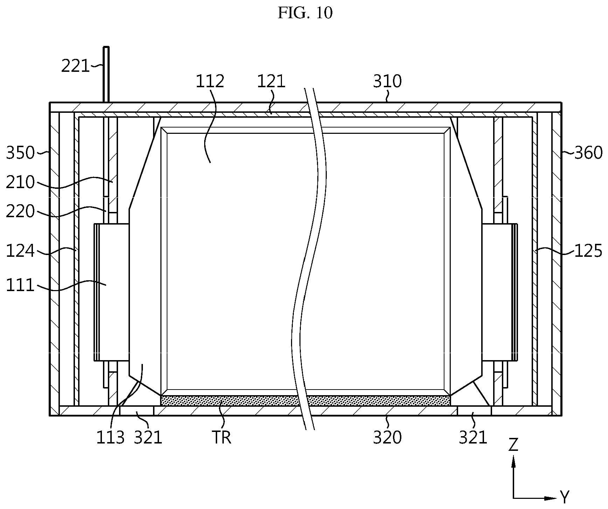

Meanwhile, the pouch-type battery cell 110 may generate gas as a side reaction, for example, during charging and discharging. In particular, during overcharging and discharging, the internal pressure may increase significantly due to a large amount of gas, which may cause swelling of the pouch case. If the swelling worsens, the bonding strength of the heat-fused sealing portion may deteriorate, so that the sealing portion ruptures and gas or the like is ejected. At this time, the cell terrace 113 is likely to be damaged first, compared to other portions, because it has lower airtightness due to the electrode lead 111 provided therein and generates more heat. Considering the structural characteristics of the pouch-type battery cell 110, in order to minimize diffusion of gas or the like emitted from the battery cell 110 inside the module case 300 and cause the gas to be discharged to the outside of the module case 300 through a shortest path in the battery module according to an embodiment of the present disclosure, as shown in FIGS. 9 and 10, the gas venting hole 321 is provided at a position corresponding to the position of the cell terrace 113 where the electrode lead 111 of the pouch-type battery cell 110 protrudes.

In addition, as shown in FIG. 9, each gas venting hole 321 is configured to be located between the first side cover portion 122 and the second side cover portion 123 of each cell cover 120. In this case, the gap between the first side cover portion 122 and the second side cover portion 123, that is, the ratio of the width of the cell cover 120 and the diameter of the venting hole 321 may be preferably determined in the range of 1:0.5 to 1:0.7.

According to this configuration, gas or the like emitted from the battery cell 110 accommodated in a specific cell cover 120 may vent to the lower portion of the module case 300 only through the venting hole 321 located below the specific cell cover 120. That is, since the entire area around the venting hole 321 is blocked, directional venting of gas may be induced more effectively in the downward direction. In addition, it is effective to prevent gases from passing over and spreading to other cell covers 120 adjacent to the specific cell cover 120.

According to the configuration of the battery module 10 according to the present disclosure described above, when a thermal event occurs in the battery cell 110, gases or the like may be more effectively guided to the gas venting hole 321 provided at the bottom of the module case 300. Therefore, the battery module according to the present disclosure may have more improved directional venting performance than the conventional battery module.

In addition, according to the present disclosure, it is possible to improve the support and rigidity of the pouch-type battery cells 110, and when a thermal event occurs, heat energy propagation between the pouch-type battery cells 110 may be effectively blocked.

Meanwhile, a battery pack according to the present disclosure may include one or more battery modules described above. Additionally, the battery pack according to the present disclosure may be applied to vehicles such as electric vehicles.

As described above, although the present disclosure has been described with reference to limited embodiments and drawings, the present disclosure is not limited thereto, and the scope of the present invention is defined by the appended claims.

Meanwhile, although terms indicating directions such as upward, downwards, left, right, forward, and backward are used in this specification, it is obvious to those skilled in the art to which the present disclosure pertains that these terms are only for convenience of explanation and may vary depending on the location of the target object or the location of the observer.

## Claims

1. A battery module comprising:
a cell unit stack (100) comprised of a plurality of cell units (101) stacked in one direction;
a bus-bar frame assembly (200) disposed inside the cell unit stack and configured to electrically connect pouch-type battery cells (110); and
a module case (300) configured to store the cell unit stack and the bus-bar frame assembly,
wherein the cell unit comprises:
at least one pouch-type battery cell; and a cell cover (120) configured to surround the pouch-type battery cell and the bus-bar frame assembly and having an open bottom;
wherein the cell cover comprises:
an upper cover portion (121) configured to cover the top face of the battery cell and the bus-bar frame assembly stored therein;
a first side cover portion (122) and a second side cover portion (123) extending downwards from the left edge and right edge of the upper cover portion so as to cover the left face and right face of the battery cell, respectively; and
a front cover portion (124) and a rear cover portion (125) extending downwards from the front end and rear end of the upper cover portion, respectively, so as to cover at least a portion of the bus-bar frame assembly.

2. The battery module according to claim 1,
wherein the cell cover is configured such that the lower face of the battery cell is open.

3. The battery module according to claim 1,
wherein the cell cover is configured
such that the first side cover portion and the second side cover portion have a length shorter than the length of the upper cover portion.

4. The battery module according to claim 1,
wherein the cell cover is configured
such that the first side cover portion and the second side cover portion have a symmetrical structure, and
such that portions between one ends of the first and second side cover portions and the front cover portion, and portions between the other ends of the first and second side cover portions and the rear cover portion have a side opening (O), respectively.

5. The battery module according to claim 1,
wherein, in the cell unit stack,
at least one of the cell covers has a terminal hole (TH) through which a terminal bus-bar (221, 222) provided in the bus-bar frame assembly passes.

6. The battery module according to claim 1,
wherein the bus-bar frame assembly comprises bus-bars (220) in the form of a metal bar and a bus-bar frame (210), in the form of a plate, configured to support the bus-bars, and
wherein the bus-bar frame has a coupling groove (212) into which at least a portion of the end of the first side cover portion and the end of the second side cover portion is inserted to a predetermined depth in the stacked cell units.

7. The battery module according to claim 1,
wherein the module case has a gas venting hole (321) provided on the bottom plate supporting the cell unit stack at the lower portion of the cell unit stack.

8. The battery module according to claim 7,
wherein the gas venting hole is
provided on the bottom plate at a position corresponding to the position of a cell terrace (113) where an electrode lead (111) of the pouch-type battery cell protrudes.

9. A battery pack comprising the battery module according to any one of claims 1 to 8.

## Patentansprüche

1. Batteriemodul, umfassend:
einen Zelleinheitenstapel (100), welcher eine Mehrzahl von Zelleinheiten (101) umfasst, welche in einer Richtung gestapelt sind;
eine Bus-Bar-Rahmenanordnung (200), welche innerhalb des Zelleinheitenstapels angeordnet ist und dazu eingerichtet ist, Beutel-Typ-Batteriezellen (110) elektrisch zu verbinden; und
ein Modulgehäuse (300), welches dazu eingerichtet ist, den Zelleinheitenstapel und die Bus-Bar-Rahmenanordnung zu lagern,
wobei die Zelleinheit umfasst:
wenigstens eine Beutel-Typ-Batteriezelle; und eine Zellabdeckung (120), welche dazu eingerichtet ist, die Beutel-Typ-Batteriezelle und die Bus-Bar-Rahmenanordnung zu umgeben und einen offenen Boden aufweist;
wobei die Zellabdeckung umfasst:
einen oberen Abdeckabschnitt (121), welcher dazu eingerichtet ist, die Oberseite der Batteriezelle und die darin gelagerte Bus-Bar-Rahmenanordnung abzudecken;
einen ersten seitlichen Abdeckabschnitt (122) und einen zweiten seitlichen Abdeckabschnitt (123), welche sich jeweils von dem linken Rand und dem rechten Rand des oberen Abdeckabschnitts nach unten erstrecken, sodass die linke Seite beziehungsweise die rechte Seite der Batteriezelle abgedeckt ist; und
einen vorderen Abdeckabschnitt (124) und einen hinteren Abdeckabschnitt (125), welche sich von dem vorderen Ende beziehungsweise dem hinteren Ende des oberen Abdeckabschnitts nach unten erstrecken, sodass wenigstens ein Abschnitt der Bus-Bar-Rahmenanordnung abgedeckt ist.

2. Batteriemodul nach Anspruch 1,
wobei die Zellabdeckung derart eingerichtet ist, dass die Unterseite der Batteriezelle offen ist.

3. Batteriemodul nach Anspruch 1,
wobei die Zellabdeckung derart eingerichtet ist,
dass der erste seitliche Abdeckabschnitt und der zweite seitliche Abdeckabschnitt eine Länge aufweisen, welche kürzer als die Länge des oberen Abdeckabschnitts ist.

4. Batteriemodul nach Anspruch 1,
wobei die Zellabdeckung derart eingerichtet ist,
dass der erste seitliche Abdeckabschnitt und der zweite seitliche Abdeckabschnitt eine symmetrische Struktur aufweisen, und
dass Abschnitte zwischen den einen Enden der ersten und der zweiten seitlichen Abdeckabschnitte und dem vorderen Abdeckabschnitt und Abschnitte zwischen den anderen Enden der ersten und der zweiten seitlichen Abdeckabschnitte und dem hinteren Abdeckabschnitt jeweils eine seitliche Öffnung (O) aufweisen.

5. Batteriemodul nach Anspruch 1,
wobei, in dem Zelleinheitenstapel,
wenigstens eine der Zellabdeckungen ein Anschlussloch (TH) aufweist, durch welches eine Anschluss-Bus-Bar (221, 222), welche in der Bus-Bar-Rahmenanordnung bereitgestellt ist, hindurchführt.

6. Batteriemodul nach Anspruch 1,
wobei die Bus-Bar-Rahmenanordnung Bus-Bars (220) in der Form einer Metallschiene und einen Bus-Bar-Rahmen (210) in der Form einer Platte umfasst, welcher dazu eingerichtet ist, die Bus-Bars zu tragen, und
wobei der Bus-Bar-Rahmen eine Kopplungsnut (212) aufweist, in welche wenigstens ein Abschnitt des Endes des ersten seitlichen Abdeckabschnitts und des Endes des zweiten seitlichen Abdeckabschnitts bis zu einer vorbestimmten Tiefe in die gestapelten Zelleinheiten eingeführt ist.

7. Batteriemodul nach Anspruch 1,
wobei das Modulgehäuse ein Gasentlüftungsloch (321) aufweist, welches an der Bodenplatte bereitgestellt ist, welche den Zelleinheitenstapel an dem unteren Abschnitt des Zelleinheitenstapels trägt.

8. Batteriemodul nach Anspruch 7,
wobei das Gasentlüftungsloch an der Bodenplatte an einer Position bereitgestellt ist, welche einer Position einer Zellterrasse (113) entspricht, an welcher eine Elektrodenleitung (111) der Beutel-Typ-Batteriezelle hervorsteht.

9. Batteriepack, umfassend das Batteriemodul nach einem der Ansprüche 1 bis 8.

## Revendications

1. Module de batterie comprenant :
un empilement d'unités cellulaires (100) comprenant une pluralité d'unités cellulaires (101) empilées dans une direction ;
un ensemble châssis de barres omnibus (200) disposé à l'intérieur de l'empilement d'unités cellulaires et configuré pour connecter électriquement des cellules de batterie de type poche (110) ; et
un boîtier de module (300) configuré pour stocker l'empilement d'unités cellulaires et l'ensemble châssis de barres omnibus,
dans lequel l'unité cellulaire comprend :
au moins une cellule de batterie de type poche ; et un couvercle de cellule (120) configuré pour entourer la cellule de batterie de type poche et l'ensemble châssis de barres omnibus et ayant un fond ouvert ;
dans lequel le couvercle de cellule comprend :
une partie de couvercle supérieure (121) configurée pour recouvrir la face supérieure de la cellule de batterie et l'ensemble châssis de barres omnibus stocké dans celle-ci ;
une première partie de couvercle latérale (122) et une seconde partie de couvercle latérale (123) s'étendant vers le bas à partir du bord gauche et du bord droit de la partie de couvercle supérieure de manière à recouvrir la face gauche et la face droite de la cellule de batterie, respectivement ; et
une partie de couvercle avant (124) et une partie de couvercle arrière (125) s'étendant vers le bas à partir de l'extrémité avant et de l'extrémité arrière de la partie de couvercle supérieure, respectivement, de manière à recouvrir au moins une partie de l'ensemble châssis de barres omnibus.

2. Module de batterie selon la revendication 1,
dans lequel le couvercle de cellule est configuré de sorte que la face inférieure de la cellule de batterie est ouverte.

3. Module de batterie selon la revendication 1,
dans lequel le couvercle de cellule est configuré
de sorte que la première partie de couvercle latérale et la seconde partie de couvercle latérale ont une longueur plus courte que la longueur de la partie de couvercle supérieure.

4. Module de batterie selon la revendication 1,
dans lequel le couvercle de cellule est configuré
de sorte que la première partie de couvercle latérale et la seconde partie de couvercle latérale ont une structure symétrique, et
de sorte que des parties entre les unes extrémités des première et seconde parties de couvercle latérales et la partie de couvercle avant, et des parties entre les autres extrémités des première et seconde parties de couvercle latérales et la partie de couvercle arrière présentent une ouverture latérale (O), respectivement.

5. Module de batterie selon la revendication 1,
dans lequel, dans l'empilement d'unités cellulaires,
au moins un des couvercles de cellule a un orifice de borne (TH) à travers lequel passe une barre omnibus de borne (221, 222) agencée dans l'ensemble châssis de barres omnibus.

6. Module de batterie selon la revendication 1,
dans lequel l'ensemble châssis de barres omnibus comprend des barres omnibus (220) sous la forme d'une barre métallique et un châssis de barres omnibus (210), sous la forme d'une plaque, configuré pour supporter les barres omnibus, et
dans lequel le châssis de barres omnibus a une rainure de couplage (212) dans laquelle au moins une partie de l'extrémité de la première partie de couvercle latérale et de l'extrémité de la seconde partie de couvercle latérale est insérée jusqu'à une profondeur prédéterminée dans les unités cellulaires empilées.

7. Module de batterie selon la revendication 1,
dans lequel le boîtier de module présente un orifice de ventilation de gaz (321) agencé sur la plaque de fond supportant l'empilement d'unités cellulaires au niveau de la partie inférieure de l'empilement d'unités cellulaires.

8. Module de batterie selon la revendication 7,
dans lequel l'orifice de ventilation de gaz est
agencé sur la plaque de fond à une position correspondant à la position d'une terrasse de cellule (113) où fait saillie un fil d'électrode (111) de la cellule de batterie de type poche.

9. Bloc-batterie comprenant le module de batterie selon l'une quelconque des revendications 1 à 8.
